# EUROPÄISCHE PATENTSCHRIFT

(11) **EP 2 893 654 B1**
(45) Veröffentlichungstag und Bekanntmachung des Hinweises auf die Patenterteilung: **05.10.2016**
(21) Anmeldenummer: 13756911.7
(22) Anmeldetag: 05.09.2013
(51) Int. Cl.: H04B 17/00

(54) **KALIBRIERVORRICHTUNG, SIGNALVERARBEITUNGSVORRICHTUNG UND BENUTZERSCHNITTSTELLE FÜR DIESELBE**
CALIBRATING DEVICE, SIGNAL PROCESSING DEVICE, AND USER INTERFACE FOR SAME
DISPOSITIF D'ÉTALONNAGE, DISPOSITIF DE TRAITEMENT DE SIGNAL ET INTERFACE UTILISATEUR POUR CELUI-CI

(30) Priorität: 06.09.2012 DE 102012215820
(43) Veröffentlichungstag der Anmeldung: 15.07.2015
(73) Patentinhaber: Innovationszentrum für Telekommunikationstechnik GmbH IZT, 91058 Erlangen (DE)
(72) Erfinder: PERTHOLD, Rainer, 91085 Weisendorf (DE); ROMMELFANGER, Oliver, 90425 Nürnberg (DE); GICK, Ralf, 90461 Nürnberg (DE)
(74) Vertreter: Stöckeler, Ferdinand
(86) Internationale Anmeldenummer: PCT/EP2013/068369
(87) Internationale Veröffentlichungsnummer: WO 2014/037443

(56) Entgegenhaltungen:
- DE-A1- 2 641 783
- US-A1- 2010 041 353
- ZUMKELLER M ET AL: "FADINGKANAL-SIMULATOR FADICS", RFE RADIO FERNSEHEN ELEKTRONIK, HUSS MEDIEN GMBH, BERLIN, DE, Bd. 40, Nr. 10, 1. Januar 1991 (1991-01-01), Seiten 596-598, XP000265288, ISSN: 1436-1574

## Beschreibung

Ausführungsbeispiele der vorliegenden Erfindung beziehen sich auf eine Kalibriervorrichtung, eine Signalverarbeitungsvorrichtung für ein HF-Signal und auf eine Benutzerschnittstelle für die Signalverarbeitungsvorrichtung sowie auf ein Verfahren zum Kalibrieren und Betreiben derselben.

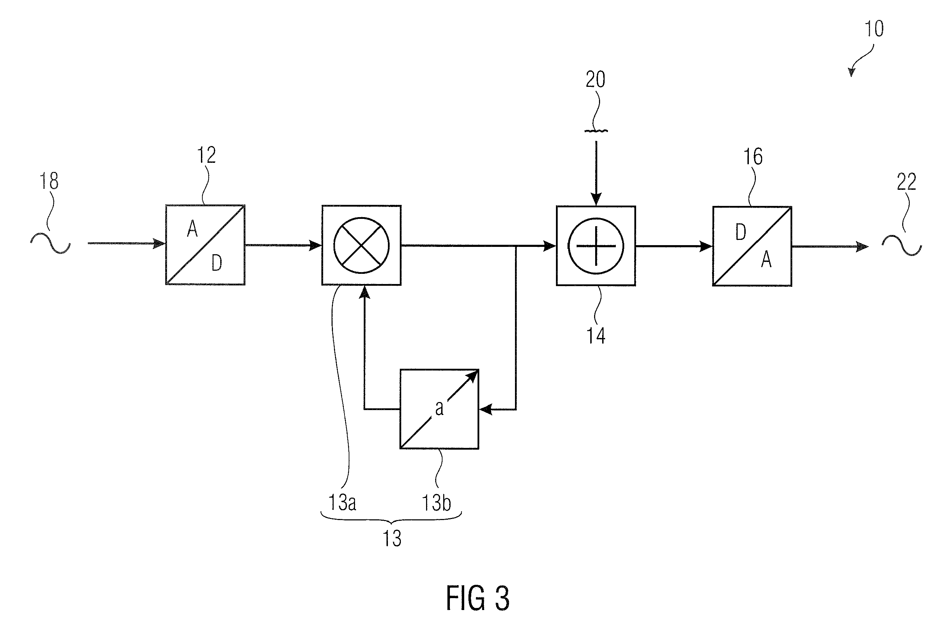

Unter Signalverarbeitungsvorrichtungen werden beispielsweise Kanal- oder Payload-Simulatoren (Nutzsignalsimulatoren) verstanden, bei denen ein HF-Signal (Hochfrequenzsignal) eingespeist wird und in modifizierter Form wieder ausgegeben wird. Die auf das HF-Signal aufgebrachten Modifikationen entsprechen in etwa den Signalveränderungen, die bei Übertragung des HF-Signals unter Realbedingungen über einen Kanal (wie z. B. einen Telekommunikationskanal oder eine Satellitenverbindung) infolge von Störeinflüssen entstehen würde. Insofern kann durch derartige Signalverarbeitungsvorrichtungen simuliert werden, wie ein HF-Signal nach Übertragung über einen Kanal (Signalstrecke) bei den Empfängern ankommen würde. Im Folgenden wird eine derartige Signalverarbeitungsvorrichtung bzw. ein derartiger Kanal-Simulator entsprechend dem Stand der Technik anhand von Fig. 3 erörtert.

Fig. 3 zeigt einen Kanalsimulator 10 mit einer Eingangsstufe 12, einer Signalverarbeitungsstufe 14 und einer Ausgangsstufe 16. Die Eingangsstufe 12 kann beispielsweise einen Analog-Digital-Wandler, einen Signalmischer, Verstärkungselemente und Dämpfungselemente (nicht dargestellt) aufweisen. Analog hierzu weist die Ausgangsstufe 16 einen Digital-Analog-Wandler und weitere Verstärkungs- bzw. Dämpfungselemente (nicht dargestellt) auf. Da hier die Signalverarbeitung digital, also nach Umrechnung einer realen Leistung (in dBm) in eine digital repräsentierte Zahl (dB) erfolgt, ist die Signalverarbeitungsvorrichtung 14 in Form eines digitalen Additionsmischers ausgeführt.

Um mit dem Signalsimulator 10 eine Übertragungsstrecke zu simulieren, wird die Eingangsstufe 12 mit einem idealen HF-Signal 18 (Nutzsignal) beaufschlagt, welches mit dem Analog-Digital-Wandler 12a digitalisiert wird. Das digitalisierte Nutzsignal wird in der Signalverarbeitungsstufe 14 entsprechend einem Modifikationssignal 20 modifiziert bzw. verschiedenen Störeinflüssen, wie zum Beispiel Rauschen, nichtlinearen Verzerrungen, linearen Verzerrungen (Filter), ausgesetzt oder entsprechend einem Kanalmodell für eine Mehrwegausbreitung verändert. Hierzu wird z.B. das das Nutzsignal mit dem Modifikationssignale 20 überlagert und anschließend in der Ausgangsstufe 16 wieder in ein analoges HF-Signal gewandelt und als simuliertes Signal 22 (inkl. den Modifikationsanteilen 20) ausgegeben. Da die Signalverarbeitungsvorrichtung 10 nur einen begrenzten Aussteuerbereich hat, wird typischerweise der Pegel des Nutzsignals 18 mittels Verstärkungs- bzw. Dämpfungselemente in der Eingangsstufe 12 bzw. in der Ausgangsstufe 16 angepasst. Somit kann das Nutzsignal 18 mit einer einstellbaren definierten Verstärkung (nach Kalibrierung) vom Eingang zum Ausgang übertragen werden. Die Verstärkungsanpassung des Nutzsignals 18 erfolgt beispielsweise in der Art, dass bei der Analog-Digital-Wandlung in dem Analog-Digital-Wandler der Eingangsstufe 12 und bei der Digital-Analog-Wandlung des kombinierten Nutzsignals in der Ausgangsstufe 16 ein gutes Signal-Rausch-Verhältnis erzielt wird. Hierbei muss insbesondere beachtet werden, dass die Leistung des Summensignals im Rahmen der Signalverarbeitung (vgl. Signalverarbeitungsstufe 14) des Nutzsignals 18 im Regelfall verändert werden kann und soll.

Hierbei wird dann die ungefähre Verstärkung der Eingangsstufe 12 und der Ausgangsstufe 16 vom Benutzer eingestellt. Eine genaue Kontrolle des Signalpegels ist nur mit Hilfe von externem Mess-Equipment möglich. Infolgedessen kann der Benutzer nur mittelbar feststellen, ob die von ihm gewählte Verstärkungseinstellung angemessen ist. Eine weitere konventionelle Lösungsmöglichkeit ist die in Fig. 3 dargestellte automatische Verstärkungsregelung (Automatic Gain Control - AGC). Diese ist zwischen der Eingangsstufe 12 und der Signalverarbeitungsstufe 14 angeordnet und regelt somit die Verstärkung des Nutzsignals 18 im digitalen Bereich. Hierzu weist die automatische Verstärkungseinstellung 13 einen Multiplikationsmischer 13a und ein Verstärkungselement 13b auf, das ausgebildet ist, um das digitalisierte Nutzsignal 18 zu vermessen (Leistungsdetektion) und mit intern erzeugten Signalen zu vergleichen. Im nächsten Schritt beaufschlagt das Verstärkungselement 13b den Mischer 13a mit einem Verstärkungssignal, so dass das digitalisierte Nutzsignal angepasst werden kann. Um die Anpassung zu kontrollieren, wird das Signal für die Leistungsdetektion im Verstärkungselement 13b typischerweise nach dem Mischer 13a abgezweigt, so dass also eine Rückkoppelungsschleife im digitalen Bereich gebildet wird. In anderen Worten ausgedrückt heißt das, dass durch den Mischer 13a der automatischen Verstärkungseinstellung 13 die digitalen Werte, die eine reale Leistung (z. B. in dBm) repräsentieren so verändert werden, dass hier keine Verstärkung im klassischen Sinne erfolgt, sondern nur eine Umrechnung der digitalen Signalwerte für das HF-Signal 18. Das Umschalten der Verstärkung bzw. das Beaufschlagen mit einem Verstärkungssignal führt meist zu einer unerwünschten Störung des Nutzsignals 18. Des Weiteren entstehen unerwünschte Querempfindlichkeiten in dem Sinne, dass beispielsweise das Hinzufügen eines Modifikationssignals 20 gleichzeitig die Leistung des Nutzsignals am Ausgang reduziert. Ferner ist die Aussteuerung der Eingangshardware nicht optimal, da die korrekte Aussteuerung erst später digital angepasst wird und Störsignale sowie Rauschpegel mit verstärken. Alle intern erzeugten Signale 20, die additiv zum Nutzsignal 18 hinzugefügt werden, verfälschen die Ausgangsleistung (die beispielsweise vor Ermittlung eines Testsignals ermittelt wurde). Der Benutzer muss sich somit Pegeländerungen durch das Modifikationssignal 20 nachträglich errechnen, da bei der Einstellung der Verstärkungen die zusätzlich vom Benutzer addierten Signale 20 nicht berücksichtigt werden. Deshalb besteht der Bedarf nach einem verbesserten Ansatz.

Im Stand der Technik gibt es Lösungen, die zumindest verbessert gegenüber dem obigen Konzept sind, aber jedoch nicht die angesprochenen Probleme in der Gänze lösen. Die Patentschrift US 2010/041353 zeigt eine Technik zum Kalibrieren eines Transceivers mit einem Receiverpfad und einem Transmitterpfad. Hier umfasst der Transceiver einen Signalkorrektor und je Pfad einen einstellbaren Verstärker.

Aufgabe der vorliegenden Erfindung ist es, ein Konzept zu schaffen, das die Verstärkungseinstellung bzw. Kalibrierung einer Signalverarbeitungsvorrichtung hinsichtlich Benutzerfreundlichkeit, Auswertbarkeit der Nutzsignale und Signaltreue der Nutzsignale verbessert.

Die Aufgabe wird durch eine Kalibriervorrichtung gemäß Anspruch 1, und ein Verfahren zum Kalibrieren einer Signalverarbeitungsvorrichtung gemäß Anspruch 13.

Ausführungsbeispiele schaffen eine Kalibriervorrichtung für eine Signalverarbeitungsvorrichtung, die eine Eingangsstufe (mit einstellbarer Eingangsverstärkung), eine Signalverarbeitungsstufe und eine Ausgangsstufe (mit einstellbarer Ausgangsverstärkung) aufweist. Die Kalibriervorrichtung umfasst zumindest einen Ausgangsstufen-Kalibrierer, der eine mit der Ausgangsstufe koppelbare Testsignalquelle, einen zwischen Ausgang der Ausgangsstufe und Eingang der Eingangsstufe schaltbaren Rückkoppelungskanal und einen mit der Eingangsstufe koppelbaren Signalanalysator umfasst. Diese Signalquelle ist ausgebildet, um ein Testsignal der Ausgangsstufe bereitzustellen, welches nach Signalverarbeitung durch die Ausgangsstufe über den Rückkoppelungskanal der Eingangsstufe zugeführt wird. Der Signalanalysator ist ausgebildet, um das Testsignal nach Signalverarbeitung durch die (ggf. bereits kalibrierte) Eingangsstufe zu analysieren und auf Basis der Analyse Abweichungen einer Ist-Ausgangsverstärkung der Ausgangsstufe bei einer Soll-Ausgangsverstärkung der Ausgangsstufe und/oder Abweichungen einer Ist-Eingangsverstärkung der Eingangsstufe bei einer Soll-Eingangsverstärkung der Eingangsstufe zu ermitteln. Da das Testsignal sowohl über die Ausgangsstufe als auch über die Eingangsstufe vor Analyse desselben übertragen wird, können so die Abweichungen der Ausgangs- und Eingangsstufe und bei Kenntnis der Abweichungen der Eingangsstufe bzw. bei einer kalibrierten Eingangsstufe die Abweichungen der Ausgangsstufe ermittelt werden, so dass diese Abweichungen in einem nachfolgenden Schritt kompensierbar sind.

Ausführungsbeispiele der vorliegenden Erfindung basieren auf der Erkenntnis, dass sowohl durch die Verstärkung der Eingangsstufe als auch durch die Verstärkung der Ausgangsstufe unerwünschte Signalbeeinflussungen erfolgen. Diese können in Form von Soll-Ist-Abweichungen bei einer Kalibrierung ermittelt werden, so dass die unerwünschten Beeinflussungen der Ein- und Ausgangsstufe bzw. die in diesen entstehenden Abweichungen (z. B. in Folge von Bauteiltoleranzen, Alterung oder Temperatureffekten) ausgeglichen werden können. Die Kalibrierung erfolgt derart, dass ein Testsignal über die Ausgangsstufe und die Eingangsstufe einem Signalanalysator zugeführt wird, wobei aus dem Verhältnis des gemessenen Signalpegels und des bekannten Testsignals der Testsignalquelle die in der Übertragungskette (Ausgangs- und Eingangsstufe) Abweichungen hervorgehen. Ausgehend von einer bereits kalibrierten Eingangsstufe bei bereits gewählter Soll-Eingangsverstärkung derselben (die von dem zu verarbeitendem HF-Signal abhängig ist) können somit bei gewählter Soll-Ausgangsverstärkung die Abweichungen der Ist-Ausgangsverstärkung der Ausgangsstufe direkt detektiert werden.

Deshalb weist entsprechend weiteren Ausführungsbeispielen die Kalibriervorrichtung einen Eingangsstufen-Kalibrierer auf, der dazu ausgebildet ist, um mittels des Signalanalysators Abweichungen einer Ist-Eingangsverstärkung der Eingangsstufe bei einer gewählten Soll-Eingangsverstärkung der Eingangsstufe zu ermitteln. Hierzu analysiert der Signalanalysator ein Kalibriersignal, welches von einer Kalibriersignalquelle, die direkt mit dem Eingang der Eingangsstufe gekoppelt ist.

Entsprechend weiteren Ausführungsbeispielen kann auf Basis der Abweichungen der Ausgangs- und Eingangsstufe ein Kalibrierdatensatz ermittelt werden, anhand welchem die Abweichungen der Ist-Ausgangsverstärkung der jeweiligen Soll-Ausgangsverstärkung und der Ist-Eingangsverstärkung bei der jeweiligen Soll-Eingangsverstärkung mittels eines Verstärkungselements der Signalverarbeitungsvorrichtung kompensiert werden können. Dieses Verstärkungselement kann entweder ein separates Verstärkungselement in der Übertragungskette zwischen Eingangsstufe und Ausgangsstufe oder ein bereits vorhandenes Verstärkungselement, wie z. B. ein Verstärkungselement der Eingangsstufe, sein. Somit ist es vorteilhafterweise möglich, Abweichungen, infolge von Temperaturschwankungen, Alterung oder Bauteiltoleranzen sowohl Eingangsseitig als auch Ausgangsseitig zu kompensieren. Das Verfahren zur Ermittlung der Kalibrierdaten kann auch automatisiert durchgeführt werden, da hier nicht notwendigerweise Benutzerinteraktionen notwendig sind. Um die Verstärkungseinstellung bzw. die Kalibrierung weiter zu automatisieren, kann entsprechend weiteren Ausführungsbeispielen der Signalanalysator so ausgebildet sein, ein zu verarbeitendes HF-Signal hinsichtlich seines Signalpegels zu analysieren und auf Basis des Analyseergebnisses die Verstärkung der Eingangsstufe entsprechend zu wählen, so dass die Signalverarbeitungsvorrichtung in dem richtigen Aussteuerbereich betrieben werden kann.

Weitere Ausführungsbeispiele beziehen sich auf eine Benutzerschnittstelle zur benutzerfreundlichen Einstellung der Soll-Eingangsverstärkung und Soll-Ausgangsverstärkung, die es ermöglicht, diese auf Basis von vorher ermittelten Eingangsreferenzpegel und Ausgangsreferenzpegel festzulegen. Ferner kann entsprechend weiteren Ausführungsbeispielen eine Übertragungsverstärkung durch den Benutzer festgelegt werden, sodass das die Verstärkung des zu verarbeitenden HF-Signals im Signalverarbeitungspfad zusätzlich adaptierbar ist.

Weitere Ausführungsbeispiele beziehen sich auf eine Signalverarbeitungsvorrichtung, die eine Eingangsstufe mit einstellbarer Soll-Eingangsverstärkung, eine Ausgangsstufe mit einstellbarer Soll-Ausgangsverstärkung, eine Signalverarbeitungsstufe zwischen Eingangs-und Ausgangsstufe und einen Speicher mit darauf gespeicherten ersten Kalibrierdaten aufweist. Anhand dieser ersten Kalibrierdaten sind zumindest Abweichungen der Ist-Ausgangsverstärkung der Ausgangsstufe je Soll-Ausgangsverstärkung derselben kompensierbar. Bevorzugterweise umfassen die im Speicher gespeicherten Kalibrierdaten auch zweite Kalibrierdaten, anhand welcher zusätzlich Abweichungen einer Ist-Eingangsverstärkung der Eingangsstufe je Soll-Eingangsverstärkung kompensierbar sind, oder kombinierte Kalibrierdaten, bei denen die ersten und zweiten Kalibrierdaten verrechnet sind.

Weitere Ausführungsbeispiele schaffen ein Verfahren zum Kalibrieren der o.g. Signalverarbeitungsvorrichtung. Das Verfahren umfasst das Kalibrieren der Ausgangsstufe mit den Unterschritten "Bereitstellen eines Testsignals der Ausgangsstufe", "Zurückführen des Testsignals nach Verarbeitung durch die Ausgangsstufe an die Eingangsstufen" und "Analysieren des Testsignals nach Verarbeitung durch die Eingangsstufe", um Abweichungen einer Ist-Ausgangsverstärkung der Ausgangsstufe und/oder Abweichungen einer Ist-Eingangsverstärkung der Eingangsstufe zu ermitteln.

Ein weiteres Ausführungsbeispiel schafft ein Verfahren zum Betreiben einer derartigen Signalverarbeitungsvorrichtung mit den Schritten "Ermitteln eines Signalpegels eines zu verarbeitenden HF-Signals", um auf Basis dieses eine Soll-Eingangsverstärkung der Eingangsstufe zu wählen, "Auswählen von ersten und zweiten Kalibrierdaten anhand des ermittelten Signalpegels und/oder anhand des Frequenzbereichs des verarbeitenden HF-Signals". Ferner umfasst das Verfahren den Schritt des "Veränderns des zu verarbeitenden HF-Signals oder des Überlagerns des zu verarbeitenden HF-Signals mit einem Korrektursignal entsprechend den ausgewählten ersten und zweiten Kalibrierdaten", um bei der Verarbeitung des HF-Signals Abweichungen einer Ist-Ausgangsverstärkung der Ausgangsstufe bei einer bestimmten Soll-Ausgangsverstärkung der Ausgangsstufe und Abweichungen einer Ist-Eingangsverstärkung der Eingangsstufe bei einer bestimmten Soll-Eingangsverstärkung der Eingangsstufe zu kompensieren.

Nachfolgend werden Ausführungsbeispiele anhand der beiliegenden Zeichnungen näher erläutert. Es zeigen:
- Fig. 1 a: ein schematisches Blockschaltbild einer Kalibriervorrichtung für eine Signalverarbeitungsvorrichtung gemäß einem Ausführungsbeispiel;
- Fig. 1b: ein schematisches Blockschaltbild einer Kalibriervorrichtung in Kombination mit einer Signalverarbeitungsvorrichtung gemäß Ausführungsbeispielen;
- Fig. 2: ein schematisches Blockschaltbild einer Signalverarbeitungsvorrichtung gemäß einem Ausführungsbeispiel; und
- Fig. 3: ein schematisches Blockschaltbild einer konventionellen Signalverarbeitungsvorrichtung.

Bevor Ausführungsbeispiele der vorliegenden Erfindung anhand der beiliegenden Figuren näher erläutert werden, wird darauf hingewiesen, dass gleichwirkende und gleiche Elemente mit gleichen Bezugszeichen versehen sind, so dass die Beschreibung derer austauschbar bzw. aufeinander anwendbar ist.

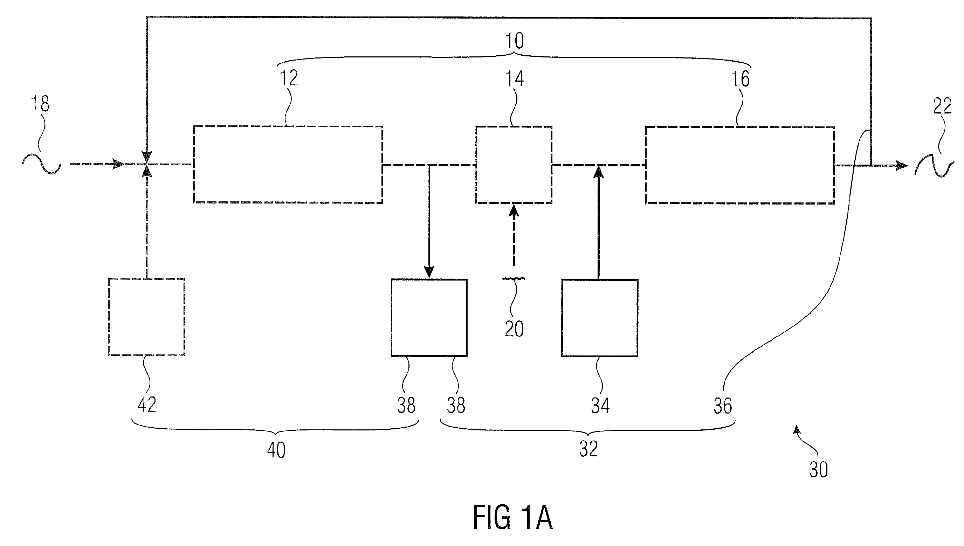

Fig. 1a zeigt eine Kalibriervorrichtung 30 für eine Signalverarbeitungsvorrichtung 10 (also z. B. ein Kanal- bzw. Payload-Simulator oder Teil eines Spektralanalysators), die eine Eingangsstufe 12, eine Signalverarbeitungsstufe 14 und eine Ausgangsstufe 16 aufweist (gestrichelte Elemente). Entsprechend der obigen Ausführungen kann die Eingangsstufe 14 einen einstellbaren Verstärker und einen Analog-Digital-Wandler aufweisen, wobei die Ausgangsstufe 16 einen Digital-Analog-Wandler und einen weiteren, ebenfalls einstellbaren Verstärker aufweisen kann. Da hier die Signalverarbeitung somit digital erfolgt, kann die Signalverarbeitungsstufe 14 beispielsweise als Additionsmischer oder Multiplikationsmischer ausgeführt sein, um beispielsweise ein Modifikationssignal 20 zuzumischen.

Die Kalibriervorrichtung 30 weist in der einfachsten Ausführung eines Ausgangsstufen-Kalibrierers 32 eine (digitale) Testsignalquelle 34, einen Rückkopplungskanal 36 und einen Signalanalysator 38 auf. Die Testsignalquelle 34 ist mit der Ausgangsstufe 16 eingangsseitig verbunden, also zwischen der Signalverarbeitungsstufe 14 und der Ausgangsstufe 16 in die Signalverarbeitungsvorrichtung 10 eingekoppelt. Der Rückkopplungskanal 36 verbindet ausgangsseitig die Ausgangsstufe 16 mit dem Eingang der Eingangsstufe 12, so dass eine Feedback-Schleife (Feedback-Loop) geformt wird. Der Signalanalysator ist mit dem Ausgang der Eingangsstufe 12 verbunden, also greift das (digitale) Signal der Eingangsstufe 12 vor der Signalverarbeitungsstufe 14 ab, und ist ausgebildet, die digitalen Werte für das eingangsseitig anliegende Signal (Testsignal oder HF-Signal 18) auszuwerten und so den Pegel des eingangsseitig anliegenden Signals zu ermitteln.

Ausgehend von einer bereits kalibrierten Eingangsstufe 12 bzw. von bereits bekannten Abweichungen der Eingangsstufe 12 können anhand einer Messung mit einem bekannten Testsignal (z. B. ein Wechselsignal oder Sinussignal mit an das zu verarbeitende HF-Signal 18 angepasster Frequenz f) der Testsignalquelle 34 die Abweichungen einer Ist-Ausgangsverstärkung der Ausgangsstufe 16 bei einer jeweiligen oder gewählten Soll-Ausgangsverstärkung ermittelt werden. Hierbei sei angemerkt, dass die Abweichungen abhängig von einer jeweiligen Frequenz des Testsignals sind. Deshalb wird das Testsignal bekannter Aussteuerung derart gewählt, dass dieses gleich oder vergleichbar mit dem zu übertragenden Nutzsignal 18 bzw. insbesondere mit dem Frequenzbereich des zu übertragenden Signals 18 ist. Ferner sind die Abweichungen von den gewählten Ausgangs-und Eingangsverstärkungen abhängig, da sich die Verstärkungselemente der Eingangs- bzw. Ausgangsstufe ggf. nicht linear verhalten. Somit erfolgt die Kalibrierung für jede Eingangs- und Ausgangsverstärkungsstufe, die wiederum abhängig von dem HF-Signal 18 und dem auszugebenden simulierten HF-Signal 22 gewählt werden.

Folglich ermittelt der Ausgangsstufen-Kalibrierer 32 nach Wahl der passenden Verstärkereinstellung (Soll-Ausgangsverstärkung) der Ausgangsstufe 16 die maximale Ausgangsleistung mittels des Signalanalysators 38. Dieser ermittelte Wert wird als Ausgangsreferenzpegel (output reference level) bezeichnet und stellt somit den Ist-Ausgangpegel für die jeweilige Soll-Ausgangsverstärkung (und die Soll-Eingangsverstärkung). Die Abweichung der Ist-Ausgangsverstärkung von der Soll-Ausgangsverstärkung wird durch das Verhältnis zwischen dem Ausgangsreferenzpegel und der Aussteuerung des digitalen Testsignals der Testsignalquelle 34 ermittelt. Dieses Verhältnis wird als Output Gain bezeichnet. Für unterschiedliche Verstärkungsstufen und/oder Frequenzbereiche können beispielsweise unterschiedliche Output Gains (Ist-Ausgangsverstärkungen) bzw. allgemein Kalibrierdaten in einer Nachschlagtabelle (nicht dargestellt) abgelegt werden. Diese ersten Kalibrierdaten umfassen Daten zur Kompensation der je Situation vorherrschenden Abweichung der Ist-Ausgangsverstärkung. Ferner sind in diesen Kalibrierdaten bzw. allgemein bei der Kalibrierung die Abweichungen der Ist-Eingangsverstärkung berücksichtigt.

Um entsprechend dem bevorzugten Ausführungsbeispiel eine vollständige Kalibrierung der Signalverarbeitungsvorrichtung 10 durchführen zu können, weist die Kalibriervorrichtung 30 einen Eingangsstufen-Kalibrierer 40 auf, der ausgebildet ist, um Abweichungen der Ist-Eingangsverstärkung je Soll-Eingangsverstärkung zu ermitteln. Der Eingangsstufen-Kalibrierer 40 nutzt einerseits den vorhandenen Signalanalysator 38 und weist darüber hinaus eine Kalibriersignalquelle 42 auf, die mit dem Eingang der Eingangsstufe 12 verbunden ist. Bei der Kalibrierung der Eingangsstufe 12 wird über die Kalibriersignalquelle (z. B. Rauschquelle, Kammgenerator, Chirpsignalgenerator) ein Kalibriersignal, z. B. ein Chirpsignalsignal ausgegeben, bei dem die Leistung ungefähr bekannt ist (aber nicht exakt bekannt sein muss). Dieses Kalibriersignal wird über die Eingangsstufe 12 verarbeitet und durch den Signalanalysator 38 analysiert. Analog zu dem Ausgangsstufen-Kalibrierer 32 ermittelt der Eingangsstufen-Kalibrierer 40 die Abweichungen dadurch, dass er für jede Verstärkereinstellung der Eingangsstufe 12 die relative Aussteuerung des mittels des Analog-Digital-Wandlers der Eingangsstufe 12 digitalisierten Kalibriersignals ermittelt. Da die Leistung der Kalibriersignalquelle 42 (ungefähr) bekannt ist, lässt sich ein analoger Leistungspegel (z. B. in dBm) für die Vollaussteuerung der Eingangsstufe 12 bei jeder Soll-Eingangsverstärkung bestimmen. Dieser Wert repräsentiert die Ist-Eingangsverstärkung und kann einem Eingangsreferenzpegel (input reference level), der einen gewünschten oder erwarteten analogen Eingangspegel (maximale Leistung des HF-Signals 18) entspricht, zugeordnet werden. Somit ist für jede Soll-Eingangsverstärkung eine Ist-Eingangsverstärkung ermittelt. Des Weiteren ist der Zusammenhang zwischen dem analogen Leistungspegel des Kalibriersignals und dem jeweiligen digitalen Abtastwert nach A/D-Wandlung ermittelbar. Dieses Verhältnis je Soll-Eingangsverstärkung (Verstärkereinstellung) wird als Input Gain bezeichnet und symbolisiert die jeweilige Abweichung der Eingangsstufe 12. Das Input Gain (Ist-Eingangsverstärkung) können zusammen mit dem Eingangsreferenzpegel analog zu dem obigen Ausführungsbeispiel in der Nachschlagtabelle bzw. Datenbank gespeichert werden.

Hierzu sei angemerkt, dass es in der Praxis ausreichend ist, dass das Kalibriersignal der Kalibriersignalquelle 42 nur ungefähr bekannt ist, da die genauen Abweichungen des Gesamtgeräts also der Ausgangsstufe 16 und der Eingangsstufe 12 mittels des Ausgangsstufen-Kalibrierers 32 (über das Verhältnis zwischen Testsignal der Testsignalquelle 34 und des mittels des Signalsanalysators 38 ermittelten zugehörigen Pegels - Output Gains) ermittelt werden. Der Eingangsreferenzpegel wird insbesondere dafür genutzt, um die Soll-Verstärkung der Eingangsstufe 12 einzustellen bzw. mit dem Ziel auszuwählen, eine gute Aussteuerung des Analog-Digital-Wandlers der Eingangsstufe 12 zu erreichen. Diese Eingangsreferenzpegel werden bei der Wahl der Soll-Eingangsverstärkung, die in Abhängigkeit von dem Pegel des zu verarbeitenden HF-Signals 18 gewählt ist, hinzugezogen. Es sei ferner angemerkt, dass auch bei der Ermittlung der Abweichung zwischen der Ist-Eingangsverstärkung die Frequenzabhängigkeit durch den Eingangsstufen-Kalibrierer berücksichtigt werden kann.

Im Folgenden werden exemplarisch die oben angesprochenen Werte anhand von Formeln genauer definiert, so dass die Abhängigkeit derer hervorgeht. Der Signalpegel, der an der Eingangsstufe 12 anliegt "P_{in_analog}" z.B. des HF-Signals 18 oder des Kalibriersignals wird durch die spektrale Leistungsdichte (PST, power spectral density) der frequenzabhängigen Signalquelle (Rauschquelle (f)) durch Integration über die Eingangsbandbreite ermittelt. Hierbei ist die Eingangsbandbreite typischerweise vorgegeben und kann näherungsweise aus den 3 dB-Bandbreiten der spektralen Leistungsdichte in den Samples ermittelt werden. Die durch den Signalanalysator 38 gemessene Leistung "P_{Messeinrichtung}" wird beispielsweise durch Mittelung über die quadrierten Absolutwerte der Samples in dem Signalanalysator, ermittelt. Das "Input Gain" kann auf Basis der zwei oben genannten Werte durch Division ermittelt werden: Input Gain = P_{Messeinrichtung} / P_{in_analog}. Die Umrechnung desselben in die Einheit dB erfolgt durch die Formel Input Gain [dB] = 10*log₁₀ (Input Gain).

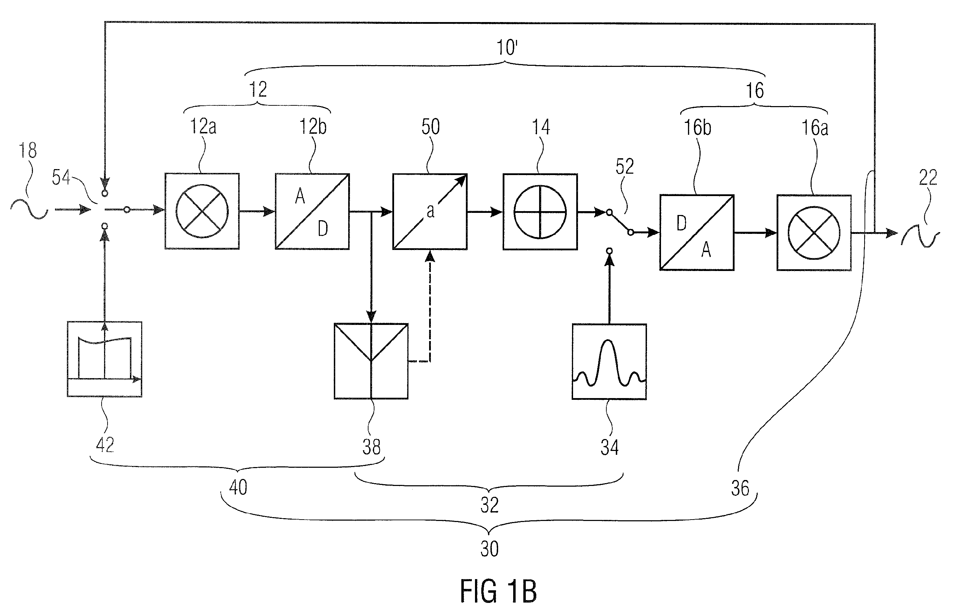

Bezug nehmend auf Fig. 1b wird eine Kombination der Kalibriervorrichtung 30 und der Signalverarbeitungsvorrichtung 10, insbesondere mit Fokus auf die Kompensation der Abweichungen innerhalb des Signalpfads zwischen Eingangsstufe 12 und Ausgangsstufe 16, erörtert.

Fig. 1b zeigt die Kalibriervorrichtung 30 mit dem Ausgangsstufen-Kalibrierer 32 und dem Eingangsstufen-Kalibrierer 40 in Kombination mit einer Signalverarbeitungsvorrichtung 10'. Die Kalibriervorrichtung 30 umfasst entsprechend einem Ausführungsbeispiel aus Fig. 1a die Kalibriersignalquelle 42, den Signalanalysator 38, die Testsignalquelle 34 sowie den Feedbackloop 36. Diese Signalverarbeitungsvorrichtung 10' umfasst die Eingangsstufe 12, die ein Verstärkungselement 12a und einen Analog-Digital-Wandler 12b aufweist, die Signalverarbeitungsstufe 14 und die Ausgangsstufe 16, die einen Digital-Analog-Wandler 16b und ein Verstärkungselement 16a aufweist. An dieser Stelle sei angemerkt, dass die einstellbaren Verstärkungselemente 12a und 16a analoge Verstärkungselemente sind und deshalb in der Eingangsstufe 12 eingangsseitig und in der Ausgangsstufe 16 ausgangsseitig angeordnet sind. Ferner weist die Signalverarbeitungsvorrichtung 10' ein weiteres Verstärkungselement 50, hier ein digitales Verstärkungselement 50 auf, das zwischen der Eingangsstufe 12 und der Signalverarbeitungsvorrichtung 14 vorgesehen ist.

Dieses Verstärkungselement 50 ist mit der Kalibriervorrichtung 30 informatorisch gekoppelt und kann beispielsweise in Form eines digitalen Mischers (vgl. Fig. 3) realisiert sein, der ausgebildet ist, die digitalen Werte, repräsentativ für die analogen Pegel, anzupassen. Bei diesem Ausführungsbeispiel ist die Testsignalquelle 34 über einen Schalter 52 in den Signalweg der Verarbeitungsvorrichtung 10' einkoppelbar, wobei der Schalter 52 zwischen der Signalverarbeitungsvorrichtung 14 und der Ausgangsstufe 16 angeordnet ist. Ferner ist auch der Rückkopplungskanal 36 schaltbar ausgeführt. Hierzu ist an dem Eingang der Eingangsstufe 12 ein weiterer Schalter 54 vorgesehen, mittels welchen der Eingang der Eingangsstufe 12 selektiv entweder mit dem Rückkopplungspfad 36, der Signalquelle des HF-Signals 18 oder der Kalibriersignalquelle 42 koppelbar ist.

Mittels dieser zwei Schalter 52 und 54 kann die Kalibrierung gesteuert bzw. aktiviert werden. Bei aktivierter Kalibrierung (vgl. Kalibriermodus) wird mittels des Schalters 54 die Eingangsstufe 12 mit der Kalibriersignalquelle 42 verbunden. Im nächsten Schritt erfolgt, wie oben beschrieben, die Ermittlung der Eingangsreferenzpegels und der Ist-Eingangsverstärkung bzw. des Input Gains durch Variieren der Soll-Eingangsverstärkung des Verstärkungselements 12a. Dann wird bei gewählter Verstärkereinstellung des Verstärkungselements 12a die Eingangsstufe 12 mittels des Schalters 54 mit dem Feedbackkanal 36 gekoppelt. Zur Ermittlung jeweiliger Ausgangsreferenzpegel (Zuordnung einer Soll-Ausgangsverstärkung zu einem gewünschten analogen Ausgangspegel) und der Ist-Ausgangsverstärkung wird die Ausgangsstufe 16 mittels des Schalters 52 mit der Testsignalquelle 34 gekoppelt. Bei Anlegen eines Testsignals erfolgt dann unter Variation der Soll-Ausgangsverstärkungen des Verstärkungselements 16a die Ermittlung des Ausgangsreferenzpegels und der Ist-Ausgangsverstärkung bzw. des Output Gains. Zu den hierbei ermittelten Abweichungen und Ausgangsreferenzpegel können Kalibrierdaten bestimmt werden und in einer Nachschlagtabelle, die beispielsweise zwischen dem Signalanalysator 38 und dem digitalen Verstärkungselement 50 angeordnet sein kann, gespeichert werden. Diese Kalibrierdaten können entweder in kombinierter Form oder in zwei-geteilter Form vorliegen, wobei der erste Kalibrierdatensatz zur Kompensation von Abweichungen der Ausgangsstufe 16 dient und der zweite Kalibriersatz zur Kompensation von Abweichungen der Eingangsstufe 12. Auf Basis dieser Kalibrierdaten kann ein Verstärkungsfaktor oder auch Dämpfungsfaktor ermittelt werden, auf Basis dessen das digitale Signal im Signalpfad zwischen der Eingangsstufe 12 und der Signalverarbeitungsstufe 14 so angepasst wird, dass die Abweichung der Eingangs- und Ausgangsstufe 12 und 16 kompensiert werden können. Neben der Kompensation der Abweichungen dient das Verstärkungselement 50 auch zur Übertragungssignalanpassung entsprechend einer Übertragungsverstärkung (Carrier Gain). Hierzu wird das Verstärkungselement 50 mit einen Korrektursignal, entsprechend welchem die Abweichungen kompensiert werden, und mit einem optionalen Übertragungsverstärkungssignal beaufschlagt.

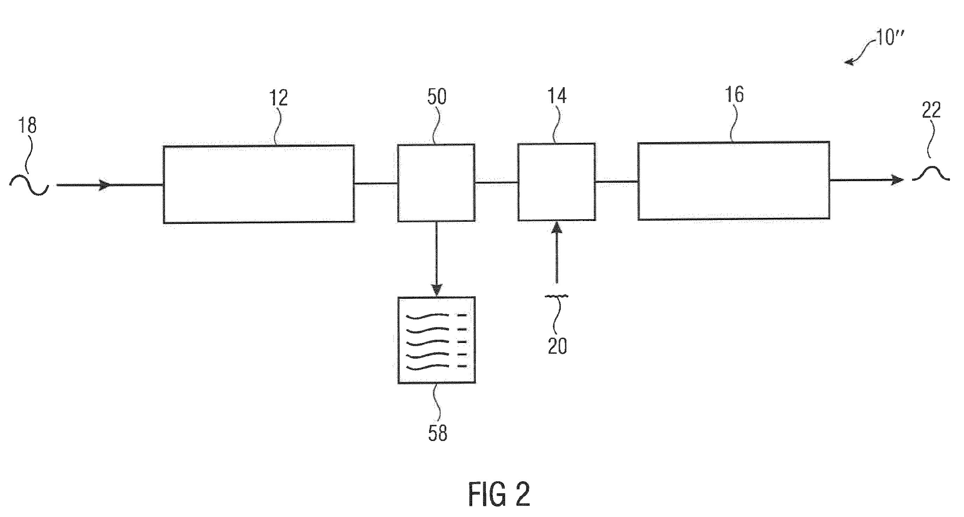

Dieser Kalibrierungsmodus kann entweder vor Betrieb der Signalverarbeitungsvorrichtung 10', automatisch bei Einschalten der Signalverarbeitungsvorrichtung 10' mittels einer Auto-Kalibrierung oder werkseitig durchgeführt werden. Bezug nehmend auf Fig. 2 wird eine weitere Signalverarbeitungsvorrichtung 10" erörtert, bei der eine Werkskalibrierung durchgeführt wurde.

Fig. 2 zeigt die Signalverarbeitungsvorrichtung 10", die die Eingangsstufe 12, die Ausgangsstufe 16, die Signalverarbeitungsstufe 14 und das zwischen der Eingangsstufe 12 und der Signalverarbeitungsstufe 14 angeordnete Verstärkungselement 50 umfasst. Ferner weist die Signalverarbeitungsvorrichtung 10" Kalibrierdaten 58, die beispielsweise in einem Speicher gespeichert sind, auf. Diese Kalibrierdaten 58 liegen in Form einer Nachschlagtabelle (z.B. als Datenbank bzw. Nachschlagtabelle das Output Gain je Verstärkereinstellung der Ausgangsstufe 16) vor, so dass abhängig von der aktuellen Signalverarbeitungsaufgabe die richtigen Kalibrierdaten 58 ausgewählt werden können. Die Signalverarbeitungsaufgabe ist insbesondere von der Frequenz des HF-Signals 18, des Pegels und der mit diesem Pegel verbundenen Soll-Eingangsverstärkung der Eingangsstufe 12 abhängig. Ferner werden die Kalibrierdaten abhängig von der Soll-Ausgangsverstärkung der Ausgangsstufe 16 gewählt, die wiederum von dem gewünschten simulierten Signal 22 und dem mittels der Signalverarbeitungsvorrichtung 14 zugemischtem Manipulationssignal 20 abhängig ist.

Bei Betrieb wird basierend auf den in der Datenbank gespeicherten Kalibrierdaten 58 oder, um genau zu sein, basierend auf den Eingangsreferenzpegel (z. B. unter Nutzung einer Software) eine geeignete Soll-Eingangsverstärkung und basierend auf dem Ausgangsreferenzpegel eine geeignete Soll-Ausgangsverstärkung ausgewählt. Hierbei wird die Bedienung durch eine Benutzerschnittstelle (nicht dargestellt) erleichtert, die informatorisch mit dem Kalibrierdatenspeicher 58 der Signalverarbeitungsvorrichtung 10" verbunden ist und die Signalverarbeitungsvorrichtung 10" infolge von einer Benutzerinteraktion konfiguriert. Die Benutzerschnittstelle, die beispielsweise in Form eines Computerprogramms realisiert sein kann, fragt bei dem Benutzer Eingangsreferenzpegel, Ausgangsreferenzpegel und Carrier Gain (Übertragungsverstärkung, zusätzlich gewünschte Verstärkung oder Dämpfung des (Nutz-)Signals zwischen HF-Eingang und HF-Ausgang) ab, und berechnet mittels der vorher ermittelten Kalibrierdaten 58 die jeweilige Verstärkereinstellung der Eingangsstufe 12, der Ausgangsstufe 16 und des Verstärkungselements 50. Auf Basis der mittels des Eingangsreferenzpegels bestimmten Soll-Eingangsverstärkung wird der zugehörige Input Gain durch die Benutzerschnittstelle bestimmt. In einem nächsten Schritt wird unter Zuhilfenahme der Kalibrierdaten 58 und der in diesen gespeicherten Ausgangsreferenzpegel eine geeignete Soll-Ausgangsverstärkung per Benutzereingabe ausgewählt. Diese hängt von der maximalen Leistung, die der Benutzer wünscht, dass sie am Ausgang der Signalverarbeitungsvorrichtung 10" ausgegeben wird, ab. Dabei berücksichtigt die Benutzerschnittstelle neben dem (verstärkten) Nutzsignal auch die von ihm hinzugefügten Störsignale 20, z.B. Rauschen oder Signale aus einem Arbiträrgenerator. Basierend auf der Soll-Ausgangsverstärkung erfolgt mittels der Kalibrierdaten 58 die Bestimmung des zugehörigen Output Gains automatisch. Durch Verrechnung bzw. Kombination des ermitteln Input Gains und Output Gains wird unter Berücksichtigung des vom Benutzer gewünschten Carrier Gains die Verstärkung des digitalen Nutzsignals durch das Verstärkungselement 50 definiert. Der Carrier Gain legt somit ein Pegel-Verhältnis zwischen dem digitalisierten Eingangssignal und dem Manipulationssignal 20 fest. Also kann durch das Verstärkungselement 50 sowohl eine Verstärkung als auch Dämpfung des digitalisierten Eingangssignals erfolgen. Da die Übertragungsvorrichtung 10" optional auch eine Bandbegrenzung vornimmt, bezieht sich der Carrier Gain auf die Frequenz oder den Frequenzbereich mit der maximalen Verstärkung. Infolgedessen verstärkt das Verstärkungselement bzw. Kompositionsglied 50 das Nutzsignal entsprechend dem Carrier Gain, wobei gleichzeitig die die Abweichungen der Ist-Ausgangsverstärkung und der Ist-Eingangsverstärkung kompensiert werden. Über eine Aussteuerungsanzeige kann der Benutzer eingangs- und ausgangsseitig über die tatsächliche Aussteuerung informiert werden. Da bei diesem Konzept die Verstärkung anhand der Kalibrierdaten 58 entsprechend der Benutzereingabe festgelegt wird und nicht automatisch, wie in Fig. 3 dargestellt, nachgeregelt wird, werden Störungen durch die Verstärkungsregelung vermieden. Ferner bleibt die Verstärkung (Carrier Gain) für das Nutzsignal konstant, auch wenn die Soll-Eingangs- und/oder die Soll-Ausgangsverstärkung (Eingangs- oder Ausgangsreferenzpegel) geändert werden. Auf Basis der Kalibrierdaten und der gewählten Soll-Eingangsverstärkung bzw. Soll-Ausgangsverstärkung ist das Verhalten der Signalverarbeitungsvorrichtung 10' für den Nutzer nachvollziehbar und somit vorhersagbar.

Entsprechend weiteren Ausführungsbeispielen kann die Signalverarbeitungsvorrichtung 10" ein Terminal zwischen der Eingangsstufe 12 und dem Verstärkungselement 50 für den Signalanalysator, eine Einkopplungsvorrichtung (vgl. Schalter 52 aus Fig. 1b) für eine Testsignalquelle zwischen der Signalverarbeitungsstufe 14 und der Ausgangsstufe 16 sowie Anschlüsse für einen Rückkopplungskanal und für eine Kalibriersignalquelle aufweisen, so dass die oben beschriebene Kalibriervorrichtung 30 an die Signalverarbeitungsvorrichtung 10" anschließbar ist.

Bezug nehmend auf den Signalanalysator 38 aus Fig. 1a und 1b sei angemerkt, dass dieser auch zur Bestimmung des Pegels des HF-Signals 18 genutzt werden kann, so dass auf Basis des ermittelten Pegels die Soll-Eingangsverstärkung der Eingangsstufe 12 automatisch einstellt werden kann. Bei der Ermittlung des Pegels des HF-Signals 18 kann die Soll-Eingangsverstärkung solange geändert werden, bis über den Signalanalysator 38 ein Pegel festgestellt wird, der innerhalb des Aussteuerungsbereichs, der typischerweise durch den Analog-Digital-Wandler der Eingangsstufe 12 definiert ist, liegt.

Wie oben bereits angedeutet, wird zur Verstärkereinstellung der Eingangsstufe 12, also zur richtigen Wahl der Soll-Eingangsverstärkung der Eingangsreferenzpegel hinzugezogen. Hierbei können Aussteuerreserven für HF-Signale 18 mit nicht konstanter Einhüllung berücksichtigt werden. Ferner können weitere Sicherheitsaufschläge berücksichtigt werden, da das Verhältnis zwischen Maximalsignal und Durchschnittssignal (peak to average ratio) des HF-Signals 18 typischerweise bei der Auswahl der Verstärkereinstellung nicht bekannt ist. Analog hierzu können diese Sicherheitsaufschläge und/oder Aussteuerreserven bei den Ausgangsreferenzpegel berücksichtigt werden.

Hinsichtlich des Ausführungsbeispiels zu der Speicherung der Kalibrierdaten sei deshalb angemerkt, dass die oben genannten Sicherheitsaufschläge bzw. Aussteuerreserven bevorzugt zusammen mit den Eingangsreferenzpegel und den Ausgangsreferenzpegel gespeichert werden.

Hinsichtlich Fig. 1b sei angemerkt, dass das Verstärkungselement nicht notwendigerweise, wie oben beschrieben, digital mittels eines Mischers, der ein Korrektursignal zumischt, realisiert sein muss, sondern auch andere Mittel, z. B. ein analoges Verstärkungselement, zur Verstärkereinstellung eingesetzt sein könnten.

Ferner sein angemerkt, dass die Benutzerschnittstelle der Übertragungsvorrichtung 10" mit einem optionalen Signalanalysator verbunden sein kann, so dass die Ermittlung des Pegels des anliegenden HF-Signals 18 und damit die Bestimmung des Eingangsreferenzpegels automatisch erfolgen kann.

Obwohl manche Aspekte im Zusammenhang mit einer Vorrichtung beschrieben wurden, versteht es sich, dass diese Aspekte auch eine Beschreibung des entsprechenden Verfahrens zum Kalibrieren und Betreiben der Signalverarbeitungsvorrichtung 10, 10' und 10" darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle Verfahrensschritte können durch einen Hardwareapparat (unter Verwendung eines Hardwareapparats, wie z. B. einen Mikroprozessor, einen programmierbaren Computer oder eine elektronische Schaltung ausgeführt werden. Bei einigen Ausführungsbeispielen können einige oder mehrere der wichtigen Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kalibriervorrichtung (30) für eine Signalverarbeitungsvorrichtung (10, 10', 10"), die eine Eingangsstufe (12), eine Signalverarbeitungsstufe (14) und eine Ausgangsstufe (16) aufweist, mit folgenden Merkmalen:
einem Ausgangsstufen-Kalibrierer (32), der eine mit der Ausgangsstufe (16) koppelbare Testsignalquelle (34), einen zwischen Ausgang der Ausgangsstufe (16) und Eingang der Eingangsstufe (12) schaltbaren Rückkopplungskanal (36) und einen mit der Eingangsstufe (12) koppelbaren Signalanalysator (38) umfasst,
wobei die Testsignalquelle (34) ausgebildet ist, um ein Testsignal der Ausgangsstufe (16) bereitzustellen, welches nach Verarbeitung durch die Ausgangsstufe (16) über den Rückkopplungskanal (36) der Eingangsstufe (12) zuführbar ist,
wobei der Signalanalysator (38) ausgebildet ist, um das Testsignal nach Verarbeitung durch die Eingangsstufe (12) zu analysieren und auf Basis der Analyse Abweichungen einer Ist-Ausgangsverstärkung der Ausgangsstufe (16) bei einer Soll-Ausgangsverstärkung der Ausgangsstufe (16) und/oder Abweichungen einer Ist-Eingangsverstärkung der Eingangsstufe (12) bei einer Soll-Eingangsverstärkung der Eingangsstufe (12) zu ermitteln,
wobei die Kalibriervorrichtung (30) einen Eingangsstufen-Kalibrierer (40) aufweist, die eine mit dem Eingang der Eingangsstufe (12) koppelbare Kalibriersignalquelle und den mit der Eingangsstufe (12) koppelbaren Signalanalysator (38) umfasst,
wobei die Kalibriersignalquelle (42) ausgebildet ist, um ein Kalibriersignal der Eingangsstufe (12) bereitzustellen,
wobei der Signalanalysator (38) ausgebildet ist, um das Kalibriersignal nach Verarbeitung durch die Eingangsstufe (12) zu analysieren und auf Basis der Analyse Abweichungen einer Ist-Eingangsverstärkung der Eingangsstufe (12) bei einer Soll-Eingangsverstärkung der Eingangsstufe (12) zu ermitteln.

2. Kalibriervorrichtung (30) gemäß Anspruch 1, wobei auf Basis der Abweichungen der Ist-Ausgangsverstärkung bei der Soll-Ausgangsverstärkung erste Kalibrierdaten (58) ermittelbar sind, anhand welcher die Abweichungen der Ist-Ausgangsverstärkung bei der Soll-Ausgangsverstärkung mittels eines Verstärkungselements (50) der Signalverarbeitungsvorrichtung (10, 10', 10") kompensierbar sind.

3. Kalibriervorrichtung (30) gemäß Anspruch 1 oder 2, wobei der Ausgangsstufen-Kalibrierer (32) ausgebildet ist, um die Abweichungen in Abhängigkeit von einer unterschiedlich gewählten Soll-Eingangsverstärkung der Eingangsstufe (12) und/oder der Soll-Ausgangsverstärkung der Ausgangsstufe (16) zu ermitteln.

4. Kalibriervorrichtung (30) gemäß einem der Ansprüche 1 bis 3, wobei der Ausgangsstufen-Kalibrierer (32) ausgebildet ist, um die Abweichungen in Abhängigkeit von unterschiedlichen Frequenzen eines zu verarbeitenden HF-Signals (18) zu ermitteln.

5. Kalibriervorrichtung (30) gemäß einem der Ansprüche 1 bis 4, wobei der Ausgangsstufen-Kalibrierer (32) ausgebildet ist, um bei der Analyse der Abweichungen der Ist-Ausgangsverstärkung bei der Soll-Ausgangsverstärkung Abweichungen einer Ist-Eingangsverstärkung der Eingangsstufe (12) bei einer Soll-Eingangsverstärkung der Eingangsstufe (12) zu berücksichtigen.

6. Kalibriervorrichtung (30) gemäß einem der Ansprüche 1 bis 5, wobei das von der Testsignalquelle (34) ausgegebene Testsignal ein bekanntes Wechselsignal, Sinussignal oder Dauersignal ist.

7. Kalibriervorrichtung (30) gemäß einem der Ansprüche 1 bis 6, wobei der Signalanalysator (38) ausgebildet ist, um einen Signalpegel eines von der Eingangsstufe (12) ausgegeben Signals zu ermitteln.

8. Kalibriervorrichtung (30) gemäß einem der Ansprüche 1 bis 7, , wobei auf Basis der Abweichungen der Ist-Eingangsverstärkung bei der Soll-Eingangsverstärkung zweite Kalibrierdaten (58) ermittelbar sind, anhand welcher die Abweichungen der Ist-Eingangsverstärkung bei der Soll-Eingangsverstärkung mittels eines Verstärkungselements (50) der Signalverarbeitungsvorrichtung (10, 10', 10") kompensierbar sind.

9. Kalibriervorrichtung (30) gemäß einem der Ansprüche 2 bis 8, die einen Speicher mit einer Nachschlagtabelle aufweist, in welcher die ersten und/oder weitere Kalibrierdaten (58) speicherbar sind.

10. Kalibriervorrichtung (30) gemäß einem der Ansprüche 2 bis 9, die das Verstärkungselement (50) aufweist, das ausgebildet ist, um ein zu verarbeitendes digitales Signal in der Signalverarbeitungsvorrichtung (10, 10', 10") entsprechend den ersten Kalibrierdaten (58) und/oder entsprechend weiteren Kalibrierdaten (58) zu verändern oder mit einem Korrektursignal entsprechend zu überlagern, so dass die Abweichungen der Ist-Ausgangsverstärkung bei der Soll-Ausgangsverstärkung und/oder weitere Abweichungen kompensiert werden.

11. Kalibriervorrichtung (30) gemäß einem der Ansprüche 7 bis 10, wobei der Ausgangsstufen-Kalibrierer (32) ausgebildet ist, um automatisch die Abweichungen der Ist-Ausgangsverstärkung bei der Soll-Ausgangsverstärkung zu bestimmen, nachdem mittels des Eingangsstufen-Kalibrierers die Abweichungen der Ist-Eingangsverstärkung bei der Soll-Eingangsverstärkung ermittelt sind, und
wobei die Kalibriervorrichtung (30) ausgebildet ist, um anhand der Abweichungen der Ist-Ausgangsverstärkung bei der Soll-Ausgangsverstärkung und der Abweichungen der Ist-Eingangsverstärkung bei der Soll-Eingangsverstärkung kombinierte Kalibrierdaten (58) zu berechnen, anhand welcher die Abweichungen der Ist-Ausgangsverstärkung und der Ist-Eingangsverstärkung mittels eines Verstärkungselements (50) der Signalverarbeitungsvorrichtung (10, 10', 10") kompensierbar sind.

12. Kalibriervorrichtung (30) gemäß Anspruch 11, wobei der Signalanalysator (38) ausgebildet ist, um einen Signalpegel eines zu verarbeitenden HF-Signals (18) zu ermitteln, und wobei die Kalibriervorrichtung (30) ausgebildet ist, um die Soll-Eingangsverstärkung auf Basis des ermittelten Signalpegels festzulegen.

13. Verfahren zum Kalibrieren einer Signalverarbeitungsvorrichtung (10, 10', 10"), die eine Eingangsstufe (12), eine Signalverarbeitungsstufe (14) und eine Ausgangsstufe (16) aufweist, mit folgenden Schritten:
Kalibrieren der Ausgangsstufe (16) mit den Unterschritten Bereitstellen eines Testsignals der Ausgangsstufe (16), Zurückführen des Testsignals nach Verarbeitung durch die Ausgangsstufe (16) an die Eingangsstufe (12) und Analysieren des Testsignals nach Verarbeitung durch die Eingangsstufe (12), um Abweichungen einer Ist-Ausgangsverstärkung der Ausgangsstufe (16) bei einer Soll-Ausgangsverstärkung der Ausgangsstufe (16) und/oder Abweichungen einer Ist-Eingangsverstärkung der Eingangsstufe (12) bei einer Soll-Eingangsverstärkung der Eingangsstufe (12) zu ermitteln,
wobei das Verfahren den Schritt des Kalibrieren der Eingangsstufe (12) vor dem Kalibrieren der Ausgangsstufe (16) aufweist,
wobei das Kalibrieren der Eingangsstufe (12) die Unterschritte des Bereitstellens eines Kalibriersignals der Eingangsstufe (12) und des Analysierens des Kalibriersignals nach Verarbeitung durch die Eingangsstufe (12) aufweist, um Abweichungen einer Ist-Eingangsverstärkung der Eingangsstufe (12) bei einer Soll-Eingangsverstärkung der Eingangsstufe (12) zu ermitteln,
wobei die Abweichungen der Ist-Eingangsverstärkung bei dem Schritt des Kalibrierens der Ausgangsstufe (16) berücksichtigt werden.

14. Verfahren gemäß Anspruch 13, das für jede gewählte Soll-Eingangsverstärkung der Eingangsstufe (12) und/oder für jeden Frequenzbereich eines zu verarbeitenden HF-Signals (18) wiederholt wird.

15. Verfahren gemäß Anspruch 13 oder 14, das den Schritt des Veränderns des zu verarbeitenden HF-Signals (18) entsprechend einer über die Benutzerschnittstelle ausgewählten Übertragungsverstärkung aufweist.

16. Computerprogramm mit einem Programmcode zur Durchführung des Verfahrens nach einem der Ansprüche 13 bis 15, wenn das Programm auf einem Computer abläuft.

## Claims

1. Calibration device (30) for a signal processing device (10, 10', 10") comprising an input stage (12), a signal processing stage (14) and an output stage (16), comprising:
an output stage calibrator (32) including a test signal source (34) adapted to be coupled to the output stage (16), a feedback channel (36) connectable between output of the output stage (16) and input of the input stage (12), and a signal analyzer (38) adapted to be coupled to the input stage (12),
wherein the test signal source (34) is implemented to provide a test signal to the output stage (16), which can be supplied to the input stage (12) via the feedback channel (36) after processing by the output stage (16),
wherein the signal analyzer (38) is implemented to analyze the test signal after processing by the input stage (12) and to determine, based on the analysis, deviations of an actual output amplification of the output stage (16) at a set output amplification of the output stage (16) and/or deviations of an actual input amplification of the input stage (12) at a set input amplification of the input stage (12),
wherein the calibration device (30) comprises an input stage calibrator (40), which includes a calibration signal source adapted to be coupled to the input of the input stage (12) and the signal analyzer (38) adapted to be coupled to the input stage (12),
wherein the calibration signal source (42) is implemented to provide a calibration signal to the input stage (12),
wherein the signal analyzer (38) is implemented to analyze the calibration signal after processing by the input stage (12) and determine, based on the analysis, deviations of an actual input amplification of the input stage (12) at a set input amplification of the input stage (12).

2. Calibration device (30) according to claim 1, wherein, based on the deviations of the actual output amplification at the set output amplification, first calibration data (58) can be determined, based on which the deviations of the actual output amplification at the set output amplification can be compensated by means of an amplification element (50) of the signal processing device (10, 10', 10").

3. Calibration device (30) according to claim 1 or 2, wherein the output stage calibrator (32) is implemented to determine the deviations in dependence on a differently selected set input amplification of the input stage (12) and/or the set output amplification of the output stage (16).

4. Calibration device (30) according to one of claims 1 to 3, wherein the output stage calibrator (32) is implemented to determine the deviations in dependence on different frequencies of an HF signal (18) to be processed.

5. Calibration device (30) according to one of claims 1 to 4, wherein the output stage calibrator (32) is implemented to consider, during the analysis of the deviations of the actual output amplification at the set output amplification, deviations of an actual input amplification of the input stage (12) at a set input amplification of the input stage (12).

6. Calibration device (30) according to one of claims 1 to 5, wherein the test signal output by the test signal source (34) is a known alternating signal, sinusoidal signal or continuous signal.

7. Calibration device (30) according to one of claims 1 to 6, wherein the signal analyzer (38) is implemented to determine a signal level of a signal output by the input stage (12).

8. Calibration device (30) according to one of claims 1 to 7, wherein, based on the deviations of the actual input amplification at the set input amplification, second calibration data (58) can be determined, based on which the deviations of the actual input amplification at the set input amplification can be compensated by means of an amplification element (50) of the signal processing device (10, 10', 10").

9. Calibration device (30) according to one of claims 2 to 8, comprising a memory with a look-up table where the first and/or further calibration data (58) can be stored.

10. Calibration device (30) according to one of claims 2 to 9, comprising an amplification element (50) that is implemented to change a digital signal to be processed in the signal processing device (10, 10', 10") according to the first calibration data (58) and/or according to further calibration data (58), or to superimpose the same with a correction signal, such that the deviations of the actual output amplification at the set output amplification and/or further deviations are compensated.

11. Calibration device (30) according to one of claims 7 to 10, wherein the output stage calibrator (32) is implemented to automatically determine the deviations of the actual output amplification at the set output amplification, after having determined, by means of the input stage calibrator, the deviations of the actual input amplification at the set input amplification, and
wherein the calibration device (30) is implemented to calculate, based on the deviations of the actual output amplification at the set output amplification and the deviations of the actual input amplification at the set input amplification, combined calibration data (58), based on which the deviations of the actual output amplification and the actual input amplification can be compensated by means of an amplification element (50) of the signal processing device (10, 10', 10").

12. Calibration device (30) according to claim 11, wherein the signal analyzer (38) is implemented to determine a signal level of an HF signal (18) to be processed, and wherein the calibration device (30) is implemented to determine the set input amplification based on the determined signal level.

13. Method for calibrating a signal processing device (10, 10', 10") comprising an input stage (12), a signal processing stage (14) and an output stage (16), comprising:
calibrating the output stage (16) with the substeps providing a test signal to the output stage (16), returning the test signal to the input stage (12) after processing by the output stage (16) and analyzing the test signal after processing by the input stage (12) to determine deviations of an actual output amplification of the output stage (16) at a set output amplification of the output stage (16) and/or deviations of an actual input amplification of the input stage (12) at a set input amplification of the input stage (12),
wherein the method comprises the step of calibrating the input stage (12) prior to calibrating the output stage (16),
wherein calibrating the input stage (12) comprises the substeps of providing a calibration signal to the input stage (12) and analyzing the calibration signal after processing by the input stage (12), in order to determine deviations of an actual input amplification of the input stage (12) at a set input amplification of the input stage (12),
wherein the deviations of the actual input amplification are considered in the step of calibrating the output stage (16).

14. Method according to claim 13 which is repeated for each selected set input amplification of the input stage (12) and/or for each frequency range of an HF signal (18) to be processed.

15. Method according to claim 13 or 14 comprising the step of changing the HF signal (18) to be processed according to a transmission amplification selected via the user interface.

16. Computer program having a program code for performing the method according to one of claims 13 to 15 when the program runs on a computer.

## Revendications

1. Dispositif d'étalonnage (30) pour un dispositif de traitement de signal (10, 10', 10") présentant un étage d'entrée (12), un étage de traitement de signal (14) et un étage de sortie (16), aux caractéristiques suivantes:
un étalonneur d'étage de sortie (32) comportant une source de signal de test (34) pouvant être couplée à l'étage de sortie (16), un canal de couplage rétroactif (36) pouvant être connecté entre la sortie de l'étage de sortie (16) et l'entrée de l'étage d'entrée (12) et un analyseur de signal (38) pouvant être couplé à l'étage d'entrée (12),
dans lequel la source de signal de test (34) est réalisée pour mettre à disposition de l'étage de sortie (16) un signal de test qui peut, après traitement par l'étage de sortie (16), être alimenté par l'intermédiaire du canal de couplage rétroactif (36) vers l'étage d'entrée (12),
dans lequel l'analyseur de signal (38) est réalisé pour analyser le signal de test après traitement par l'étage d'entrée (12) et pour déterminer, sur base de l'analyse, des écarts d'une amplification de sortie réelle de l'étage de sortie (16) lors d'une amplification de sortie de consigne de l'étage de sortie (16) et/ou des écarts d'une amplification d'entrée réelle de l'étage d'entrée (12) lors d'une amplification d'entrée de consigne de l'étage d'entrée (12),
dans lequel le dispositif d'étalonnage (30) présente un étalonneur d'étage d'entrée (40) comportant une source de signal d'étalonnage pouvant être couplée à l'entrée de l'étage d'entrée (12) et un analyseur de signal (38) pouvant être couplé à l'étage d'entrée (12),
dans lequel la source de signal d'étalonnage (42) est réalisée pour mettre un signal d'étalonnage à disposition de l'étage d'entrée (12),
dans lequel l'analyseur de signal (38) est réalisé pour analyser le signal d'étalonnage après traitement par l'étage d'entrée (12) et pour déterminer, sur base de l'analyse, des écarts d'une amplification d'entrée réelle de l'étage d'entrée (12) lors d'une amplification d'entrée de consigne de l'étage d'entrée (12).

2. Dispositif d'étalonnage (30) selon la revendication 1, dans lequel peuvent être déterminées, sur base des écarts de l'amplification de sortie réelle lors de l'amplification de sortie de consigne, des premières données d'étalonnage (58) à l'aide desquelles les écarts de l'amplification de sortie réelle lors de l'amplification de sortie de consigne peuvent être compensées au moyen d'un élément d'amplification (50) du moyen de traitement de signal (10, 10', 10").

3. Dispositif d'étalonnage (30) selon la revendication 1 ou 2, dans lequel l'étalonneur d'étage de sortie (32) est réalisé pour déterminer les écarts en fonction d'une amplification d'entrée de consigne sélectionnée différente de l'étage d'entrée (12) et/ou de l'amplification de sortie de consigne de l'étage de sortie (16).

4. Dispositif d'étalonnage (30) selon l'une des revendications 1 à 3, dans lequel l'étalonneur d'étage de sortie (32) est réalisé pour déterminer les écarts en fonction de différentes fréquences d'un signal HF à traiter (18).

5. Dispositif d'étalonnage (30) selon l'une des revendications 1 à 4, dans lequel l'étalonneur d'étage de sortie (32) est réalisé pour tenir compte, lors de l'analyse des écarts de l'amplification de sortie réelle lors de l'amplification de sortie de consigne, des écarts d'une amplification d'entrée réelle de l'étage d'entrée (12) lors d'une amplification d'entrée de consigne de l'étage d'entrée (12).

6. Dispositif d'étalonnage (30) selon l'une des revendications 1 à 5, dans lequel le signal de test émis par la source de signal de test (34) est un signal alternatif, un signal sinusoïdal ou un signal continu connu.

7. Dispositif d'étalonnage (30) selon l'une des revendications 1 à 6, dans lequel l'analyseur de signal (38) est réalisé pour déterminer un niveau de signal d'un signal sorti par l'étage d'entrée (12).

8. Dispositif d'étalonnage (30) selon l'une des revendications 1 à 7, dans lequel peuvent être déterminées, sur base des écarts de l'amplification d'entrée réelle lors de l'amplification d'entrée de consigne (58), des deuxièmes données d'étalonnage à l'aide desquelles les écarts de l'amplification d'entrée réelle lors de l'amplification d'entrée de consigne peuvent être compensés au moyen d'un élément d'amplification (50) du dispositif de traitement de signal (10, 10', 10").

9. Dispositif d'étalonnage (30) selon l'une des revendications 2 à 8, présentant une mémoire avec un tableau de consultation dans laquelle peuvent être mémorisées les premières et/ou d'autres données d'étalonnage (58).

10. Dispositif d'étalonnage (30) selon l'une des revendications 2 à 9, présentant l'élément d'amplification (50), réalisé pour modifier un signal numérique à traiter dans le dispositif de traitement de signal (10, 10', 10") selon les premières données d'étalonnage (58) et/ou selon d'autres données d'étalonnage (58) ou à le superposer en conséquence par un signal de correction, de sorte que soient compensés les écarts de l'amplification de sortie réelle lors de l'amplification de sortie de consigne et/ou d'autres écarts.

11. Dispositif d'étalonnage (30) selon l'une des revendications 7 à 10, dans lequel l'étalonneur de l'étage de sortie (32) est réalisé pour déterminer automatiquement les écarts de l'amplification de sortie réelle lors de l'amplification de sortie de consigne après que soient déterminés à l'aide de l'étalonneur de l'étage d'entrée les écarts de l'amplification d'entrée réelle lors de l'amplification d'entrée de consigne, et
dans lequel le dispositif d'étalonnage (30) est réalisé pour calculer, à l'aide des écarts de l'amplification de sortie réelle lors de l'amplification de sortie de consigne et des écarts de l'amplification d'entrée réelle lors de l'amplification d'entrée de consigne, des données d'étalonnage (58) à l'aide desquelles les écarts de l'amplification de sortie réelle et de l'amplification d'entrée réelle peuvent être compensés au moyen d'un élément d'amplification (50) du dispositif de traitement de signal (10, 10', 10").

12. Dispositif d'étalonnage (30) selon la revendication 11, dans lequel l'analyseur de signal (38) est réalisé pour déterminer un niveau d'un signal HF à traiter (18), et dans lequel le dispositif d'étalonnage (30) est réalisé pour établir l'amplification d'entrée de consigne sur base du niveau de signal déterminé.

13. Procédé d'étalonnage d'un dispositif de traitement de signal (10, 10', 10") présentant un étage d'entrée (12), un étage de traitement de signal (14) et un étage de sortie (16), aux étapes suivantes consistant à:
étalonner l'étage de sortie (16) par les sous-étapes consistant à mettre un signal de test à disposition de l'étage de sortie (16), retro-alimenter le signal de test après traitement par l'étage de sortie (16) vers l'étage d'entrée (12) et analyser le signal de test après traitement par l'étage d'entrée (12) pour déterminer des écarts d'une amplification de sortie réelle de l'étage de sortie (16) lors d'une amplification de sortie de consigne de l'étage de sortie (16) et/ou des écarts d'une amplification d'entrée réelle de l'étage d'entrée (12) lors d'une amplification d'entrée de consigne de l'étage d'entrée,
dans lequel le procédé présente l'étape consistant à étalonner l'étage d'entrée (12) avant l'étalonnage de l'étage de sortie (16), dans lequel l'étalonnage de l'étage d'entrée (12) présente les sous-étapes consistant à mettre à disposition un signal d'étalonnage de l'étage d'entrée (12) et à analyser le signal d'étalonnage après traitement par l'étage d'entrée (12), pour déterminer des écarts d'une amplification d'entrée réelle de l'étage d'entrée (12) lors d'une amplification d'entrée de consigne de l'étage d'entrée (12),
dans lequel les écarts de l'amplification d'entrée réelle à l'étape d'étalonnage de l'étage de sortie (16) peuvent être tenus en compte.

14. Procédé selon la revendication 13 qui est répété pour chaque amplification d'entrée de consigne sélectionnée de l'étage d'entrée (12) et/ou pour chaque plage de fréquences d'un signal HF à traiter (18).

15. Procédé selon la revendication 13 ou 14, présentant l'étape consistant à modifier le signal HF à traiter (18) selon une amplification de transmission sélectionnée via l'interface utilisateur.

16. Programme d'ordinateur avec un code de programme pour réaliser le procédé selon l'une des revendications 13 à 15 lorsque le programme est exécuté sur un ordinateur.
